# FASCICULE DE BREVET EUROPEEN

(11) **EP 0 611 192 B1**
(45) Date de publication et mention de la délivrance du brevet: **10.06.1998**
(21) Numéro de dépôt: 94400236.9
(22) Date de dépôt: 04.02.1994
(51) Int. Cl.: C01G 25/00, C01G 25/02, B01J 21/06

(54) **Procédé de préparation de compositions à base d'oxydes mixtes de zirconium et de cérium**
Verfahren zur Herstellung von Zusammensetzungen auf der Basis von Zirkonium und Cerium
Process for the preparation of compositions based on mixed oxides of zirconium and cerium

(30) Priorité: 10.02.1993 FR 9301451
(43) Date de publication de la demande: 17.08.1994
(73) Titulaire: RHODIA CHIMIE, 92408 Courbevoie Cédex (FR)
(72) Inventeur: Chopin, Thierry, F-93200 Saint-Denis (FR); Vilmin, Gabriel, Princeton, NJ 08540 (US)
(74) Mandataire: Dubruc, Philippe

(56) Documents cités:
- EP-A- 0 338 799
- DE-A- 3 408 096
- FR-A- 2 328 508
- FR-A- 2 590 887
- DATABASE WPI Derwent Publications Ltd., London, GB; AN 91-205196 & JP-A-3 131 343 (NISSAN MOTOR KK)

## Description

La présente invention concerne un nouveau procédé pour la préparation de compositions à base d'oxydes mixtes de zirconium et de cérium à surfaces spécifiques améliorées, en particulier à surfaces spécifiques élevées et stables thermiquement, et susceptibles ainsi de convenir notamment pour des applications dans le domaine de la catalyse, et en particulier celui de la post-combustion automobile, par exemple en tant que catalyseurs mêmes et/ou comme supports de catalyseurs.

L'oxyde de zirconium et l'oxyde de cérium apparaissent aujourd'hui comme deux constituants particulièrement importants et intéressants; ainsi, à titre d'exemple, ils sont tous deux de plus en plus fréquemment rencontrés, seuls ou conjointement, dans de nombreuses compositions pour catalyseurs dits multifonctionnels, notamment les catalyseurs destinés au traitement des gaz d'échappement des moteurs à combustion interne. Par multifonctionnnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). On notera que de tels catalyseurs, tant au niveau de leurs compositions que de leur principe de fonctionnement, ont déja été largement décrits dans la littérature et ont fait l'objet de nombreux brevets et/ou demandes de brevets.

Même si les raisons scientifiques qui ont été avancées à ce jour pour tenter d'expliquer ce fait apparaissent encore quelque peu incertaines, voire parfois contradictoires, il semble pourtant maintenant bien établi que les catalyseurs industriels "trois voies" qui contiennent à la fois de l'oxyde de zirconium et de l'oxyde de cérium sont globalement plus efficaces que les catalyseurs qui sont soit totalement exempts des deux oxydes précités, soit exempts de seulement l'un d'entre eux.

Dans des catalyseurs tels que ci-dessus, l'oxyde de zirconium et l'oxyde de cérium , qui peuvent d'ailleurs exercer une fonction catalytique propre et/ou une fonction de simple support pour d'autres éléments catalytiques tels que platine, rhodium et autres métaux précieux, sont généralement présents sous une forme non combinée, c'est à dire que l'on retrouve ces deux constituants, au niveau du catalyseur final, sous la forme d'un simple mélange physique de particules d'oxydes bien individualisées. Ceci résulte en partie du fait que ces catalyseurs à base d'oxyde de zirconium et d'oxyde de cérium sont le plus souvent obtenus par mélange intime des poudres d'oxydes correspondants, ou bien encore de précurseurs décomposables thermiquement en ces oxydes.

Or, pour diverses raisons, il se dégage aujourd'hui dans l'état de l'art une tendance de plus en plus marquée à essayer d'introduire et de mettre en oeuvre dans la composition du catalyseur les éléments zirconium et cérium non plus sous une forme séparée et non combinée, mais au contraire directement sous la forme de véritables oxydes mixtes ZrO2-CeO2 du type essentiellement, et même de préférence totalement, solutions solides.
Toutefois, dans pareille situation, et il s'agit là d'une exigence tout à fait classique dans le domaine de la catalyse, il devient alors nécessaire de pouvoir disposer d'oxydes mixtes présentant une surface spécifique qui soit la plus élevée possible et aussi, de préférence, stable thermiquement. En effet, compte tenu du fait que l'efficacité d'un catalyseur est généralement d'autant plus grande que la surface de contact entre le catalyseur (phase catalytiquement active) et les réactifs est élevée, il convient que le catalyseur, tant à l'état neuf qu'après un emploi prolongé à plus ou moins hautes températures, soit maintenu dans un état le plus divisé possible, c'est à dire que les particules solides, ou cristallites, qui le constituent restent aussi petites et aussi individualisées que possible, ce qui ne peut être obtenu qu'à partir d'oxydes mixtes présentant des surfaces spécifiques élevées et relativement stables en températures.

La présente invention vise à la satisfaction d'un tel besoin.

Plus précisemment encore, la présente invention se propose ainsi de mettre à disposition un nouveau procédé qui permette d'accéder de manière simple, économique et reproductible à une large gamme de compositions à base d'oxydes mixtes de type essentiellement ou totalement solutions solides dans le système ZrO2-CeO2 (par large gamme de compositions, on entend ici que les proportions entre zirconium et cérium dans les solutions solides peuvent varier dans des limites très importantes, comme indiqué ci-après), lesdites compositions présentant pour avantages principaux d'une part de posséder une grande surface spécifique, et ceci même pour des teneurs élevées en cérium, et d'autre part de conserver une surface spécifique importante même après des calcinations à des températures élevées.

A cet effet, il est maitenant proposé, selon la présente invention, un nouveau procédé de synthèse convenant à la préparation de compositions à base d'oxydes mixtes de zirconium et de cérium, ledit procédé étant caractérisé par le fait qu'il comprend les étapes essentielles suivantes :
(i) on mélange tout d'abord, dans les proportions stoechiométriques requises, un sol de zirconium d'une part et un sol de cérium d'autre part, le rapport r entre le diamètre moyen r₁ des particules constituant ledit sol de zirconium et le diamètre moyen r₂ des particules constituant ledit sol de cérium étant d'au moins 5 (r=r₁/r₂),
(ii) puis on sèche par atomisation le mélange ainsi obtenu,
(iii) et enfin on calcine le produit séché,
ce par quoi l'on obtient une composition finale à base d'oxydes mixtes de zirconium et de cérium présentant des caractéristiques de surface spécifique améliorées.

Grâce au procédé selon l'invention, on peut déja obtenir des phases de type oxydes mixtes à des températures de calcination aussi basses qu'environ 700°C. Ce procédé permet donc de mettre en oeuvre des températures de réaction si inhabituellement basses au regard de ce qui est aujourd'hui connu dans le domaine de la synthèse des solutions solides que les produits auxquels il conduit présentent alors naturellement des surfaces spécifiques suffisamment élevées pour convenir à des applications en catalyse. L'étape de calcination permet essentiellement de former les phases solutions solides, de developper la cristallinité desdites solutions solides et/ou d'ajuster leur surface spécifique à une valeur finale désirée pour une application donnée. Les phases ainsi formées se révèlent clairement au moyen d'analyses diffractométriques aux rayons X. En outre, selon l'invention, ou peut ajuster et contrôler facilement la taille des poudres finales obtenues, et ceci simplement en jouant sur la taille des sols initiaux.

Mais d'autres caractéristiques, aspects et avantages de l'invention apparaitront encore plus complètement à la lecture de la description qui va suivre, ainsi que des divers exemples concrêts, mais non limitatifs, destinés à l'illustrer.

Dans l'exposé qui suit de la présente invention, on entend par surface spécifique, la surface spécifique B.E.T déterminée par adsorption d'azote conformément à la norme ASTM D 3663-78 établie à partir de la méthode BRUNAUER - EMMETT - TELLER et décrite dans le périodique "The Journal of the American Society, 60, 309 (1938)".

Par ailleurs, chaque fois que l'expression oxyde mixte à base de zirconium et de cérium est utilisée, elle doit être entendue comme visant également une composition (ainsi que sa préparation) pouvant contenir en outre un élément dopant (stabilisant) tel que ci-après défini, en solution solide dans l'oxyde de zirconium et/ou de cérium.

En outre, les expressions sols de cérium et sols de zirconium sont ici prises dans leur sens le plus commun, c'est à dire qu'elles désignent tout système constitué de fines particules solides de dimensions colloïdales à base d'oxyde et/ou d'oxyde hydraté (hydroxyde) de cérium ou de zirconium, en suspension dans une phase liquide aqueuse, lesdites espèces pouvant en outre, éventuellement, contenir des quantités résiduelles d'ions liés ou adsorbés tels que par exemple des nitrates, des acétates ou des ammoniums. On notera que dans de tels sols, le cérium ou le zirconium peuvent se trouver soit totalement sous la forme de colloïdes, soit simutanément sous la forme d'ions et sous la forme de colloïdes, mais sans toutefois que la proportion représentée par la forme ionique n'excède 10% environ du total de l'espèce dans le sol. Selon l'invention, on met de préférence en oeuvre des sols dans lesquels le cérium et le zirconium sont totalement sous forme colloïdale.

Enfin, on indique ici que le diamètre moyen des colloïdes constituant les sols de départ doit être entendu comme désignant le diamètre hydrodynamique moyen de ces derniers, et tel que déterminé par diffusion quasi-élastique de la lumière selon la méthode décrite par Michael L. Mc CONNELL dans la revue Analytical Chemistry 53, n° 8, 1007 A, (1981). Pour des raisons liées uniquement à la simplicité et à la clarté de l'exposé, on notera que dans ce qui suit, on a utilisé également et indifféremment l'expression "taille moyenne de sol" pour désigner le diamètre hydrodynamique moyen des colloïdes constituant un sol donné.

Le procédé de synthèse des compositions selon l'invention va maintenant être développé plus en détails.

Comme indiqué précédemment, la première étape du procédé selon l'invention consiste donc à préparer un mélange entre un sol de zirconium et un sol de cérium.

Les sols de zirconium et les sols de cérium de départ mis en oeuvre selon l'invention, ainsi que leurs divers procédés de synthèse, sont bien connus de l'homme de l'art, et ont déja été décrits dans la littérature. Certains de ces sols sont par ailleurs disponibles commercialement.

Ainsi, par exemple, des sols de zirconium peuvent être obtenus par hydrolyse à chaud d'une solution de chlorure ou de nitrate de zirconyle à une température comprise entre 140°C et 300°C, et de préférence entre 150°C et 200°C, la concentration de la solution de chlorure ou de nitrate de zirconyle étant de préférence comprise entre 0,1 et 2 mole/l exprimée en ZrO2.
Il est également possible de préparer des sols de zirconium par hydrolyse à chaud d'une solution sulfurique de zirconium, en milieu nitrique ou en milieu chlorhydryque à une température comprise entre 80 et 150°C et de préférence vèrs 90°C, le rapport molaire SO3/ZrO2 de la solution sulfurique de zirconium étant compris de préférence entre 0,34 et 1 et sa concentration variant de préférence de 0,1 à 2 mole/l exprimée en ZrO2. Le sulfate basique de zirconium ainsi obtenu est ensuite neutralisé par une base, de préférence l'ammoniaque, jusqu'à l'obtention d'un pH d'environ 8; puis on lave et on disperse ensuite le gel obtenu par ajout d'une solution d'acide nitrique, le pH du milieu de dispersion étant alors de préférence compris entre 0,5 et 5.

Selon la présente invention, on peut utiliser des sols de zirconium présentant une taille moyenne comprise entre 5 nm et 500 nm, et avantageusement comprise entre 10 et 200 nm.

Les sols de cérium utilisés dans l'invention peuvent, de même, être obtenus par toute technique appropriée, en particulier, mais non limitativement, selon les méthodes décrites dans les demandes de brevets FR-A- 2 583 735, FR-A- 2 583 736, FR-A- 2 583 737, FR-A- 2 596 380, FR-A- 2 596 382, FR-A- 2 621 576 et FR-A- 2 655 972 qui sont toutes au nom de la Demanderesse, et dont les enseignements sont ici totalement inclus à titre de référence.

Selon la présente invention, on peut mettre en oeuvre des sols de cérium dont la taille moyenne peut varier de 3 nm à 100 nm, de préférence entre 5 et 50 nm.

On notera que les pH initiaux, les concentrations, ainsi que l'ordre d'introduction, des sols de départ sont choisis et ajustés de manière telle que le mélange colloïdal résultant présente un caractère stable et homogène. A cet effet, des opérations d'agitation plus ou moins poussées peuvent être rendues nécessaires. En outre, les quantités de cérium et de zirconium à mettre en oeuvre et présentes dans le mélange résultant, doivent classiquement et simplement correspondre aux proportions stoëchiométriques requises pour l'obtention de la composition finale désirée. Les compositions rendues accessibles par le procédé selon l'invention sont développées un peu plus en détails par la suite.

Selon une caractéristique essentielle du procédé selon l'invention, le rapport entre la taille moyenne du sol de zirconium et la taille moyenne du sol de cérium (étant entendu que ces deux tailles moyennes sont exprimées dans la même unité de mesure, par exemple en nanomètre) doit être supérieur ou égal à 5 environ. De préférence, ledit rapport est choisi supérieur ou égal à 10 environ, et encore plus préférentiellement d'au moins 20 environ. Il a été trouvé que les produits obtenus avec des rapports inférieurs à 5 environ, présentent des surfaces spécifiques particulièrement mauvaises et en tous cas nettement insuffisantes pour convenir pour des applications en catalyse.

Selon une variante particulièrement avantageuse et préférée de mise en oeuvre du procédé selon l'invention, on peut en outre introduire dans le mélange ci-dessus un troisième élément (ou élément dopant) qui sera choisi au sein des éléments déja connus en soi pour stabiliser la surface spécifique des oxydes de zirconium ZrO2 et/ou des oxydes cériques CeO2, lorsque ces oxydes se présentent sous forme seule et non combinée. Il a donc été ainsi trouvé que les agents qui sont connus en eux-mêmes pour stabiliser la surface spécifique des oxydes de zirconium (zircones) et/ou des oxydes cériques pris seuls comme indiqué ci-avant permettent également, et ceci de manière inattendue et surprenante, d'améliorer de manière substantielle et significative la surface spécifique des compositions du type oxydes mixtes conformes à l'invention.

A titre d'agents stabilisants utilisables seuls ou en mélanges dans la présente invention, on peut citer notamment les éléments choisis parmi les terres rares, et en particulier l'yttrium, le lanthane, le praséodyme et le néodyme; les alcalino-terreux, en particulier le magnésium, le calcium et le baryum; l'aluminium; le silicium; le thorium; le scandium; le gallium; le bore; le titane; le vanadium; le niobium; le tantale; le chrome; le bismuth, cette liste n'étant bien entendu nullement limitative. On notera que les trois agents stabilisants que sont le lanthane, l'aluminium et le silicium conviennent ici particulièrement bien.

L'agent stabilisant est le plus souvent introduit dans le mélange sous la forme de l'un de ses sels solubles. L'introduction sous la forme d'un sol n'est pas exclue, lorsque cette dernière existe bien entendu. La quantité d'agent stabilisant à mettre en oeuvre est alors généralement telle que la teneur en élément stabilisant, exprimée sous forme oxyde, dans la composition finale soit comprise entre 0,1 et 20% en poids par rapport à l'ensemble de ladite composition.

Le mélange initial étant ainsi obtenu, on procède ensuite, conformément à la deuxième étape du procédé selon l'invention, au séchage de celui-ci.

Selon l'invention, ce séchage doit être réalisé par atomisation, c'est à dire par pulvérisation du mélange de sols dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomisateurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).
On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrèmement faible (généralement inférieur à 1/10 de seconde environ) des particules dans le réacteur présente pour avantage, entre autres, de limiter d'éventuels risques de surchauffe par suite d'un contact trop long avec les gaz chauds.

La température de l'atmosphère de séchage peut varier dans de larges limites, et elle dépend notamment du temps de séjour moyen que l'on désire ou que l'on peut imposer au produit atomisé une fois dans ladite atmosphère. D'une manière générale, les conditions du séchage (températures et/ou temps de séjour) sont déterminées classiquement de manière à au moins obtenir une élimination totale ou quasi-totale de l'eau résiduelle contenu dans le produit, c'est à dire, globalement, jusqu'à l'obtention d'un poids constant pour ce dernier.

Dans une dernière étape du procédé selon l'invention, le produit récupéré après séchage par atomisation doit enfin être calciné. Cette calcination est conduite jusqu'à formation complète du ou des oxydes mixtes désirés. Elle permet en outre de développer et/ou de parfaire la cristallinité des phases solutions solides formées, et elle peut être enfin ajustée en fonction de la température d'utilisation ultérieure réservée à la composition selon l'invention, et ceci en tenant compte du fait que la surface spécifique du produit est d'autant plus faible que la température de calcination mise en oeuvre est plus élevée. L'avantage de procéder à une calcination de la composition à une température supérieure à la température qui est strictement nécessaire pour obtenir sa formation et plus précisemment encore au moins égale à sa future température d'utilisation est que l'on favorise ainsi la stabilisation des caractéristiques du produit final, c'est à dire en particulier que l'on vise par cette opération à limiter les risques liés à une possible évolution ultérieure du produit (notamment au niveau de sa surface spécifique) lorsque ce dernier est placé dans des conditions thermiques d'utilisation plus sévères que la température de calcination subie par lui lors de sa préparation.

L'étape de calcination est généralement opérée sous air, mais une calcination menée par exemple sous gaz inerte n'est bien évidemment pas exclue.

Comme souligné ci-avant dans la description, il est possible, grâce au procédé selon l'invention, d'obtenir des solutions solides en mettant en oeuvre des températures de synthèse très basses, de l'ordre de 700°C, les solutions solides résultantes présentant alors les surfaces spécifiques les plus élevées. Il va de soi que les températures exactes auxquelles se formeront les solutions solides dépendent éminament des compositions de ces dernières, en particulier des teneurs relatives en zirconium et en cérium et de la présence ou non d'un élément dopant, de sorte qu'il n'est pas possible d'énoncer de règle générale sur ce point.
Toutefois, dans la pratique, on observe que l'étape finale de calcination peut être convenablement mise en oeuvre avec des températures de calcination qui se limitent généralement à un intervalle de valeurs comprises entre 700°C et 1000°C, de préférence comprises entre 800°C et 1000°C.

Même après des calcinations à températures élevées, c'est à dire en particulier des températures supérieures à celles qui sont strictement nécessaires pour former et/ou mettre clairement en évidence par rayons X les solutions solides désirées, les compositions obtenues selon l'invention conservent des surfaces spécifiques tout à fait acceptables.

Grâce au procédé selon l'invention, il est ainsi possible d'obtenir des compositions particulièrement intéressantes et qui vont maintenant être développées un peu plus en détails.

Ces compositions se caractérisent avant tout par leurs surfaces spécifiques élévées pour ce type de produits, à savoir supérieures à 10 m²/g .

Avantageusement, les compositions obtenues présentent une surface spécifique d'au moins 20 m²/g, de préférence encore d'au moins 30 m²/g, et encore plus préférentiellement d'au moins 40 m²/g. Dans certains cas, les compositions obtenues selon le procédé de l'invention peuvent même avoir des surfaces spécifiques d'au moins 50 m²/g.

En outre, selon une autre caractéristique intéressante de ces compositions, lorsque l'on soumet ces dernières à des températures de calcination relativement élevées, comme cela peut être le cas par exemple au cours de leur utilisation dans le domaine de la catalyse, notamment dans des pôts d'échappement, elles continuent encore à présenter des surfaces spécifiques tout à fait convenables; ainsi, portées à 800°C, les compositions obtenues selon l'invention conservent une surface spécifique qui est encore d'au moins 20 m²/g, de préférence d'au moins 30 m^{2/}g, et encore plus préférentiellement d'au moins 40 m²/g, et lorsque ces compositions sont portées à 900°C, lesdites surfaces sont encore conservées à des valeurs d'au moins 10 m²/g, de préférence d'au moins 20 m²/g, et encore plus préférentiellement d'au moins 30 m²/g.
En d'autres termes, les compositions obtenues selon l'invention présentent, au niveau de leurs surfaces spécifiques, une très bonne stabilité thermique.

La présence des éléments cérium et zirconium (et éventuellement de l'élément dopant) au sein des compositions obtenues peut être mise en évidence par de simples analyses chimiques, alors que les analyses classiques en diffraction X indiquent la forme sous laquelle cette présence existe.

Ainsi, comme indiqué précédemment dans la description, les éléments susmentionnés sont présents dans les compositions sous une forme combinée de type essentiellement, et de préférence totalement, solutions solides ou oxydes mixtes. Les spectres en diffraction X de ces compositions révèlent en particulier, au sein de ces dernières, l'existence d'une phase majoritaire clairement identifiable et correspondant à celle d'un oxyde de zirconium cristallisé dans le système cubique ou quadratique et dont les paramètres de mailles sont plus ou moins décalés par rapport à une zircone pure, traduisant ainsi l'incorporation du cérium (éventuellement de l'élément dopant) dans le réseau cristallin de l'oxyde de zirconium, et donc l'obtention d'une solution solide vraie. Aux teneurs élevées en cérium, on peut observer la présence de certaines quantités (minoritaires) d'un oxyde cérique soit non combiné soit contenant du ZrO2 en solution solide, mais dans les deux cas parfaitement noyé dans la matrice de la composition.

Exprimé sous forme d'oxydes, les compositions auxquelles le procédé selon l'invention permet d'aboutir peuvent contenir globalement de 1 à 49% en poids de cérium et de 99 à 51% en poids de zirconium. De préférence, la teneur en cérium est de 1 à 30% en poids et la teneur en zirconium de 99 à 70 % en poids. Lorsque lesdites compositions contiennent en outre un agent dopant tel que signalé ci-avant, la teneur en cet élément, toujours exprimée sous forme oxyde, peut être comprise entre 0,1 et 20 % en poids, et de préférence entre 1 et 10% en poids, par rapport à l'ensemble de la composition.

On voit donc que les solutions solides à hautes surfaces spécifiques obtenues selon l'invention peuvent varier dans une gamme très large de composition, en restant néanmoins majoritairement à base de zirconium. La teneur limite supérieure en cérium dans la composition n'est en fait imposée que par la seule limite de solubilité de cette espèce dans l'oxyde de zirconium.

Ainsi, les surfaces spécifiques remarquablement élevées des compositions obtenues selon l'invention font que ces dernières peuvent trouver de très nombreuses applications. Elles sont ainsi particulièrement bien adaptées pour être utilisées dans le domaine de la catalyse, comme catalyseurs et/ou comme supports de catalyseurs. Elles peuvent être employées comme catalyseurs ou supports de catalyseurs pour effectuer diverses réactions telles que, par exemple, la déshydratation, l'hydrosulfuration, I'hydrodénitrification, la désulfuration, l'hydrodésulfuration, la déshydrohalogénation, le réformage, le réformage à la vapeur, le craquage, l'hydrocraquage, I'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Toutefois, une des applications les plus importantes des compositions obtenues selon l'invention réside bien entendu, comme déja souligné ci-avant dans la description, dans l'utilisation de ces dernières comme constituants pour catalyseurs destinés au traitement des gaz d'échappement des moteurs à combustion interne. Plus particulièrement encore, les compositions obtenues selon l'invention conviennent particulièrement bien pour la fabrication de catalyseurs destinés au traitement des gaz d'échappement des moteurs Diesel. Ainsi, dans cette application, les compositions sont, avant ou après leur imprégnation par des éléments catalytiquement actifs, tels que des métaux précieux, mises en forme pour former des catalyseurs, par exemple sous forme de billes, soit utilisées pour former un revêtement d'un corp réfractaire tel qu'un monolithe en céramique ou métallique, ce revêtement étant bien connu dans l'état de l'art sous le terme de "wash-coat".

Les exemples qui suivent illustrent l'invention sans toutefois la limiter.

### Exemple 1

De manière à obtenir un oxyde mixte final de composition pondérale suivante : 70% ZrO2 - 30% CeO2, on mélange d'une part 7500 g d'un sol de cérium (préparé selon l'enseignement de la demande de brevet FR-A- 2 583 736) contenant 180 g de CeO2 et présentant une taille moyenne de colloïdes d'environ 5 nm, avec d'autre part 2100 g d'un sol de zirconium à 20% en poids de ZrO2 et présentant une taille moyenne de colloïdes de 100 nm (r = 20).

Le mélange ainsi obtenu est ensuite séché par atomisation au moyen d'un atomiseur type Büchi, et ceci dans les conditions suivantes :
- température d'entrée des gaz : 250°C
- température de sortie des gaz : 110°C
- pression d'atomisation : 1,5 bar

Après récupération puis calcinations sous air à différentes températures, les surfaces spécifiques BET des produits obtenus sont les suivantes :
- 6 heures à 600°C : 40 m²/g
- 6 heures à 800°C : 25 m²/g
- 6 heures à 900°C : 16 m²/g
- 6 heures à 1000°C : 15 m²/g

Sur le produit calciné à 900°C, on observe, par analyse du spectre de diffraction aux rayons X, la présence des solutions solides suivantes :
- une première phase solution solide constituée de CeO2 (25% en poids environ) dans du ZrO2; la taille moyenne des cristallites dans cette solution solide est de l'ordre de 10 nm.
- une deuxième phase solution solide constituée de ZrO2 (10% en poids environ) dans du CeO2; la taille des cristallites est de l'ordre de 9,5 nm.

### Exemple 2

On reproduit l'exemple 1, à cette différence près que l'on utilise ici un sol de zirconium présentant une taille moyenne de colloïdes de 50 nm environ (r = 10).

La surface spécifique BET du produit obtenu après une calcination de 6 heures à 900°C est de 15 m²/g.

### Exemple 3

Cet exemple illustre l'invention dans le cadre de l'utilisation d'un agent dopant, ici le silicium.

On reproduit l'exemple 1, à cette différence près que l'on ajoute en outre dans le mélange un sol de silice à titre de dopant, et ceci de manière à obtenir une composition conforme à l'invention dopée respectivement par 5%, 10% et 15% en poids de silicium, exprimé sous forme de silice SiO2.

Les surfaces spécifiques BET des produits obtenus après calcination 6 heures à 900°C sont alors, respectivement, de 24 m2/g, 33 m2/g et 39 m2/g.

Sur le produit dopé par 5% en poids de silice, les phases suivantes ont en outre été détectées aux rayons X :
- une première phase solution solide constituée de CeO2 (20% en poids environ) dans du ZrO2; la taille moyenne des cristallites dans cette solution solide est de 10 nm environ.
- une deuxième phase solution solide constituée de ZrO2 (15% environ) dans du CeO2; la taille moyenne des cristallites est de 9 nm environ.

### Exemple 4

Cet exemple illustre l'invention dans le cadre de l'utilisation du lanthane comme agent dopant.

On reproduit l'exemple 1, à cette différence près que l'on ajoute en outre dans le mélange du nitrate de lanthane à titre de dopant, et ceci de manière à obtenir une composition finale dopée par 6% en poids de lanthane, exprimé sous forme La2O3.

La surface spécifique BET du produit obtenu après calcination 6 heures à 900°C est alors de 23 m2/g.

### Exemple 5

Cet exemple illustre l'invention dans le cadre de l'utilisation du praséodyme comme agent de dopage.

On reproduit l'exemple 1, à cette différence près que l'on ajoute en outre dans le mélange initial du nitrate de praséodyme à titre de dopant, et ceci de manière à obtenir une composition finale dopée par 5% en poids de praséodyme, exprimé sous forme Pr6O11.

La surface spécifique BET du produit obtenu après calcination 6 heures à 900°C est alors de 25 m2/g.

### Exemple 6

Cet exemple illustre l'invention dans le cadre d'un dopage par de l'aluminium.

On reproduit l'exemple 1, à cette différence près que l'on ajoute en outre dans le mélange initial de sols de zirconium et de cérium un sol de bohémite à titre de dopant, et ceci de manière à obtenir une composition finale dopée par 5% en poids d'aluminium, exprimé sous forme Al2O3.

La surface spécifique BET du produit obtenu après calcination 6 heures à 900°C est alors de 25 m2/g.

### Exemple 7

Cet exemple illustre l'invention dans le cadre d'un dopage par du titane.

On reproduit l'exemple 1, à cette différence près que l'on ajoute en outre dans le mélange initial de sols un sol de titane, et ceci de manière à obtenir une composition finale dopée à raison de 2% en poids de titane, exprimé sous forme TiO2.

La surface spécifique BET du produit obtenu après calcination 6 heures à 900°C est alors de 18 m2/g.
Sur ce produit, les phases suivantes ont été détectées aux rayons X :
- une première phase solution solide constituée de CeO2 (30% en poids environ) dans du ZrO2; la taille moyenne des cristallites dans cette solution solide est de l'ordre de 8 nm.
- une deuxième phase solution solide constituée de ZrO2 (5% en poids environ) dans du CeO2; la taille moyenne des cristallites est alors de l'ordre de 9 nm.

### Exemple 8 (comparatif)

On reproduit l'exemple 1, à cette différence près que l'on met en oeuvre ici un sol de zirconium présentant une taille moyenne de colloïdes d'environ 10 nm (r = 2).

La surface spécifique BET du produit obtenu après calcination 6 heures à 900°C n'est seulement que de 2 m2/g.

### Exemple 9

On reproduit l'exemple 1, à cette différence près que les proportions entre le sol de zirconium et le sol de cérium sont cette fois ajustées de manière à obtenir une composition finale présentant les rapports pondéraux en oxydes suivants : 80% ZrO2 - 20% CeO2.

La surface spécifique BET du produit obtenu après calcination 6 heures à 900°C est alors de 30 m2/g.

### Exemple 10

On reproduit l'exemple 9, à cette différence près que l'on ajoute en outre dans le mélange de sols du nitrate de lanthane, et de ceci de manière à obtenir une composition finale contenant 1% en poids de lanthane, exprimé sous forme La2O3, par rapport à la zircone.
La surface spécifique BET du produit obtenu après calcination 6 heures à 900°C est alors de 35 m2/g.

### Exemple 11 (comparatif)

On reproduit l'exemple comparatif 8 (r=2), à cette différence près que les proportions entre le sol de zirconium et le sol de cérium sont cette fois ajustées de manière à obtenir une composition finale présentant les rapports pondéraux en oxydes donnés à l'exemple 9 (80% ZrO2 - 20% CeO2).

La surface spécifique BET du produit obtenu après calcination 6 heures à 900°C est alors inférieure à 1 m2/g.

## Revendications

1. Procédé de préparation d'une composition à base d'oxydes mixtes de zirconium et de cérium, caractérisé par le fait qu'il comprend les étapes suivantes:
(i) on mélange, dans des proportions stoechiométriques correspondant à celles de la composition finale désirée, un sol de zirconium d'une part et un sol de cérium d'autre part, le rapport r entre le diamètre moyen r₁ des particules constituant ledit sol de zirconium et le diamètre r₂ des particules constituant ledit sol de cérium étant d'au moins 5,
(ii) puis on sèche par atomisation le mélange ainsi obtenu,
(iii) et enfin on calcine le produit séché.

2. Procédé selon la revendication 1, caractérisé en ce que le diamètre moyen des particules constituant ledit sol de zirconium est compris entre 5 nm et 500 nm.

3. Procédé selon la revendication 2, caractérisé en ce que ledit diamètre moyen est compris entre 10 nm et 200 nm.

4. Procédé selon l'une quelconque des revendications précédentes, caractérisé en ce que le diamètre moyen des particules constituant ledit sol de cérium est compris entre 3 nm et 100 nm.

5. Procédé selon la revendication 4, caractérisé en ce que ledit diamètre moyen est compris entre 5 nm et 50 nm.

6. Procédé selon l'une quelconque des revendications précédentes, caractérisé en ce que ledit rapport r est supérieur ou égal à 10.

7. Procédé selon la revendication 6, caractérisé en ce que ledit rapport r est supérieur ou égal à 20.

8. Procédé selon l'une quelconque des revendications précédentes, caractérisé en ce que l'on ajoute dans ledit mélange un troisième élément (élément dopant) choisi au sein des éléments déja connus en soi comme stablisants thermiques de la surface spécifique des oxydes de zirconium et/ou des oxydes de cérium.

9. Procédé selon la revendication 8, caractérisé en ce que ledit élément dopant est choisi, seul ou en mélange, parmi les terres rares, et en particulier l'yttrium, le lanthane, le praséodyme et le néodyme; les alcalino-terreux, et en particulier le magnésium, le calcium et le baryum; l'aluminium; le silicium; le thorium; le scandium; le gallium; le bore; le titane; le vanadium; le niobium; le tantale; le chrome; le bismuth.

10. Procédé selon la revendication 9, caractérisé en ce que ledit élément dopant est choisi, seul ou en mélange, parmi le lanthane, l'aluminium et le silicium.

11. Procédé selon l'une quelconque des revendications précédentes, caractérisé en ce que ladite calcination est opérée à une température comprise entre 700°C et 1000°C.

12. Procédé selon la revendication 11, caractérisé en ce que ladite température est comprise entre 800°C et 1000°C.

13. Procédé selon l'une quelconque des revendications précédentes, pour l'obtention d'une composition contenant, exprimé sous la forme d'oxydes, de 51 à 99% en poids de zirconium et de 1 à 49% en poids de cérium.

14. Procédé selon la revendication 13, pour l'obtention d'une composition contenant en outre, exprimé sous forme d'oxyde, de 0,1 à 20% en poids, et de préférence de 1 à 10% en poids, d'un élément dopant tel que défini ci-avant.

## Claims

1. Process for the preparation of a composition based on mixed zirconium and cerium oxides, characterized in that it comprises the following stages:
(i) a zirconium sol, on the one hand, and a cerium sol, on the other hand, are mixed in stoichiometric proportions corresponding to those of the final desired composition, the ratio r of the mean diameter r₁ of the particles constituting the said zirconium sol to the diameter r₂ of the particles constituting the said cerium sol being at least 5,
(ii) the mixture thus obtained is then spray dried,
(iii) and, finally, the dried product is calcined.

2. Process according to Claim 1, characterized in that the mean diameter of the particles constituting the said zirconium sol is between 5 nm and 500 nm.

3. Process according to Claim 2, characterized in that the said mean diameter is between 10 nm and 200 nm.

4. Process according to any one of the preceding claims, characterized in that the mean diameter of the particles constituting the said cerium sol is between 3 nm and 100 nm.

5. Process according to Claim 4, characterized in that the said mean diameter is between 5 nm and 50 nm.

6. Process according to any one of the preceding claims, characterized in that the said ratio r is greater than or equal to 10.

7. Process according to Claim 6, characterized in that the said ratio r is greater than or equal to 20.

8. Process according to any one of the preceding claims, characterized in that a third element (doping element), chosen from elements already known per se as agents for thermally stabilizing the specific surface of zirconium oxides and/or cerium oxides, is added to the said mixture.

9. Process according to Claim 8, characterized in that the said doping element is chosen, alone or as a mixture, from rare-earth metals, and in particular yttrium, lanthanum, praseodymium and neodymium; alkaline-earth metals, and in particular magnesium, calcium and barium; aluminium; silicon; thorium; scandium; gallium; boron; titanium; vanadium; niobium; tantalum; chromium or bismuth.

10. Process according to Claim 9, characterized in that the said doping element is chosen, alone or as a mixture, from lanthanum, aluminium and silicon.

11. Process according to any one of the preceding claims, characterized in that the said calcination is carried out at a temperature between 700°C and 1000°C.

12. Process according to Claim 11, characterized in that the said temperature is between 800°C and 1000°C.

13. Process according to any one of the preceding claims, for obtaining a composition containing, expressed in the form of oxides, from 51 to 99% by weight of zirconium and from 1 to 49% by weight of cerium.

14. Process according to Claim 13, for obtaining a composition additionally containing, expressed in the oxide form, from 0.1 to 20% by weight, and preferably from 1 to 10% by weight, of a doping element as defined above.

## Patentansprüche

1. Verfahren zur Herstellung einer Zusammensetzung auf Basis von Zirkonium/Cer-Mischoxiden, dadurch gekennzeichnet, daß es die folgenden Verfahrensschritte umfaßt:
(i) Man mischt in stöchiometrischen Mengen entsprechend denen der gewünschten Endzusammensetzung ein Zirkoniumsol einerseits und ein Cersol andererseits, wobei das Verhältnis r zwischen dem mittleren Durchmesser r₁ der Teilchen, aus denen das Zirkoniumsol besteht, und dem Durchmesser r₂ der Teilchen, aus denen das Cersol besteht, mindestens 5 beträgt;
(ii) anschließend trocknet man die auf diese Weise erhaltene Mischung mittelts Zerstäubung; und
(iii) schließlich calciniert man das getrocknete Produkt.

2. Verfahren nach Anspruch 1, dadurch gekennzeichnet, daß der mittlere Durchmesser der Teilchen, aus denen das Zirkoniumsol besteht, zwischen 5 nm und 500 nm liegt.

3. Verfahren nach Anspruch 2, dadurch gekennzeichnet, daß der mittlere Durchmesser zwischen 10 nm und 200 nm liegt.

4. Verfahren nach einem der vorhergehenden Ansprüche, dadurch gekennzeichnet, daß der mittlere Durchmesser der Teilchen, aus denen das Cersol besteht, zwischen 3 nm und 100 nm liegt.

5. Verfahren nach Anspruch 4, dadurch gekennzeichnet, daß der mittlere Durchmesser zwischen 5 nm und 50 nm liegt.

6. Verfahren nach einem der vorhergehenden Ansprüche, dadurch gekennzeichnet, daß das Verhältnis r grösser oder gleich 10 ist.

7. Verfahren nach Anspruch 6, dadurch gekennzeichnet, daß das Verhältnis r grösser oder gleich 20 ist.

8. Verfahren nach einem der vorhergehenden Ansprüche, dadurch gekennzeichnet, daß man in die Mischung ein drittes Element (Dotierelement) hinzugibt, das ausgewählt ist aus Elementen, die als thermische Stabilisatoren für die spezifische Oberfläche von Zirkoniumoxiden und/oder Ceroxiden bereits an sich bekannt sind.

9. Verfahren nach Anspruch 8, dadurch gekennzeichnet, daß das Dotierelement ausgewählt ist, allein oder in Mischung, aus den Seltenen Erden, insbesondere Yttrium, Lanthan, Praseodym und Neodym; den Erdalkalimetallen, insbesondere Magnesium, Calcium und Barium; Aluminium; Silicium; Thorium; Scandium; Gallium; Bor; Titan; Vanadium; Niob; Tantal; Chrom; Wismuth.

10. Verfahren nach Anspruch 9, dadurch gekennzeichnet, daß das Dotierelement ausgewählt ist, allein oder in Mischung, aus Lanthan, Aluminium und Silicium.

11. Verfahren nach einem der vorhergehenden Ansprüche, dadurch gekennzeichnet, daß die Calcinierung bei einer Temperatur zwischen 700 °C und 1000 °C durchgeführt wird.

12. Verfahren nach Anspruch 11, dadurch gekennzeichnet, daß die Temperatur zwischen 800 °C und 1000 °C liegt.

13. Verfahren nach einem der vorhergehenden Ansprüche zur Herstellung einer Zusammensetzung, die 51 bis 99 Gew.-% Zirkonium und 1 bis 49 Gew.-% Cer enthält, berechnet in Form der Oxide.

14. Verfahren nach Anspruch 13 zur Herstellung einer Zusammensetzung, die außerdem 0,1 bis 20 Gew.-%, vorzugsweise 1 bis 10 Gew.-%, eines wie zuvor definierten Dotierelementes enthält, berechnet in Form des Oxides.
